# EUROPÄISCHE PATENTANMELDUNG

(11) **EP 0 995 763 A2**
(43) Veröffentlichungstag der Anmeldung: **26.04.2000**
(21) Anmeldenummer: 99119969.6
(22) Anmeldetag: 12.10.1999
(51) Int. Cl.: C08F 220/14, B29C 67/00

(54) **Copolymerisate für Rapid Prototyping**

(30) Priorität: 23.10.1998 DE 19848896
(71) Anmelder: Bayer Aktiengesellschaft, 51368 Leverkusen (DE)
(72) Erfinder: Harrison, David Bryan, Dr., 51373 Leverkusen (DE); Podszun, Wolfgang, Dr., 51061 Köln (DE)

(57) **Zusammenfassung**

Die Erfindung betrifft kugelförmige Methylmethacrylat-Copolymerisate mit einer mittleren Teilchengröße von 6 bis 50 µm und enger Teilchengrößenverteilung sowie ein Verfahren zu deren Herstellung. Die Erfindung betrifft außerdem die Verwendung der kugelförmigen Copolymerisate zur Herstellung von 3D-Modellen durch Lasersintern.

## Beschreibung

Die Erfindung betrifft kugelförmige Methylmethacrylat-Copolymerisate mit einer mittleren Teilchengröße von 6 bis 50 µm und enger Teilchengrößenverteilung sowie ein Verfahren zu deren Herstellung. Die Erfindung betrifft außerdem die Verwendung der kugelförmigen Copolymerisate zur Herstellung von 3D-Modellen durch Lasersintern.

Das Lasersintern bezeichnet ein Rapid-Prototyping Verfahren, bei dem Schüttungen aus bestimmten pulverigen Werkstoffen unter Einwirkung eines vorzugsweise durch ein Programm gesteuerten Laserstrahls an bestimmten Raumstellen aufgeheizt und versintert werden. Unter dem Begriff Rapid-prototyping werden die heute bekannten computergesteuerten additiven, automatischen 3D-Modellbauverfahren zusammengefaßt.

Ein solches Verfahren wird beispielsweise in der Patentschrift DE-C 19 701 078 beschrieben. Dabei werden niedrig schmelzende Metalle in einem Verfahren zur Herstellung von dreidimensionalen Modellen unter Verwendung einer Rapid-Prototyping-Anlage gesintert. Es werden niedrig schmelzende Metalle oder Metalllegierungen mit einem unter 200°C liegenden Schmelzpunkt in Form von Metallpulver oder Metallfolien verwendet, die weder Kunststoffbinder noch metallische Binder enthalten. Die Energie der verwendeten Laserstrahlung wird nach Maßgabe des Schmelzpunktes der verwendeten Metalle oder Metallegierungen eingerichtet.

Die Verwendung von Kunststoffpulvern zum Lasersintern ist auch bekannt (A. Gebhardt: "Rapid Prototyping", Carl Hanser Verlag, München, Wien, 1996, S.115-116). Das Verfahren dient sowohl zur Herstellung von Kunststoffmodellen als auch zur Anfertigung von positiven Vorformen für Keramikgießformen. Polymethacrylat ist aufgrund seiner guten optischen und mechanischen Eigenschaften ein für das Lasersintern gut geeigneter Kunststoff.

Ein Nachteil der bekannten Kunststoffpulver ist ihre schlechte Rieselfähigkeit, die durch die Verwendung von Rieselhilfsmitteln nur teilweise reduziert werden kann. Wegen der schlechten Rieselfähigkeit ist der Transport in der Lasersinteranlage erschwert.

Bei der Herstellung von positiven Vorformen für Keramik treten folgende folgende zusätzliche Probleme auf Die Sinterung von gemahlenem Polymer z.B. von Polystyrol, zur Vorform ist zwar durchführbar, aber die Oberflächengüte der Vorform ist nicht voll befriedigend. Die Polymervorform wird anschließend mit Keramikmaterial umgeben, das bei hohen Temperaturen zur Verfestigung gebrannt wird. Das Polymermaterial wird bei diesem Vorgang verflüchtigt. Gewünscht wird eine vollständige Verflüchtigung. Die meisten Polymerpulver lassen sich jedoch beim Brennen wegen der Verwendung von Rieselhilfsmitteln nicht rückstandslos entfernen.

Diese Nachteile lassen sich durch die Verwendung von Perlpolymerisaten für das Lasersintern vermeiden.

Homopolymerisate wie z.B. Polymethylmethacrylat lassen sich als Perlpolymerisate mit Teilchengrößen von 0,5 bis 10 µm durch Dispersionspolymerisation erzeugen. Ein geeignetes Verfahren wird beispielsweise in EP-A 610 522 beschrieben. Bei der Dispersionspolymerisation wird ein Lösungsmittel, in dem die verwendeten Monomere löslich, das gebildete Polymerisat aber unlöslich ist, eingesetzt. Die Dispersionspolymerisation liefert in der Regel hohe Ausbeuten an kugelförmiger Perlpolymerisate mit enger Teilchengrößenverteilung und einem zum Lasersintern geeigneten niedrigen Molekulargewicht. Es hat sich allerdings gezeigt, daß es schwierig ist größere Teilchen zu erzeugen. Ein weiteres Kennzeichen ist, daß die Teilchengrößenverteilung mit steigender Teilchengröße deutlich breiter wird.

Aus EP-A 610 522 geht hervor, daß die Dispersionspolymerisation von Methylmethacrylat mit Styrol als Comonomer zu kleineren Perlen mit deutlich breiterer Teilchengrößenverteilung führt als die Homopolymerisation von Methylmethacrylat. Gemäß US-A 4,614,708 konnten kugelförmige Copolymerisate aus Methylmethacrylat und anderen Methacrylatestern nur bis zu einer Teilchengröße von 5 µm durch Dispersionspolymerisation hergestellt werden. Perlpolymerisate mit einer Teilchengröße < 5 µm sind wegen ihrer geringen Fließfähigkeit und starken Neigung zum Stauben für das Lasersintern weniger gut geeignet. Durch die Dispersionspolymerisation von Methylmethacrylat mit Acrylsäure oder Methacrylsäure als Comonomer gemäß EP-A 584 407 ließen sich zwar Perlpolymerisate mit Methylmethacrylateinheiten in einer Teilchengröße von 6 µm und mit enger Teilchengrößenverteilung erzeugen. Allerdings lassen sich die Produkte schlecht aufschmelzen und sind daher ebenfalls zum Lasersintern nur eingeschränkt geeignet.

Perlpolymerisate mit einer Teilchengröße von ca. 10 bis 200 µm können durch Suspensionspolymerisation erhalten werden. Unter dem Begriff Suspensionspolymerisation wird ein Verfahren verstanden, bei dem ein Monomer oder ein monomerhaltiges Gemisch, das einen im Monomeren löslichen Initiator enthält, in einer mit dem Monomeren im wesentlichen nicht mischbaren Phase, die ein Dispergiermittel enthält, in Form von Tröpfchen, gegebenenfalls im Gemisch mit kleinen, festen Partikeln, zerteilt und durch Temperaturerhöhung unter Rühren ausgehärtet wird. Weitere Einzelheiten der Suspensionspolymerisation werden beispielsweise in C.E. Schildknecht (Hrsg.): "Polymer Processes", Interscience Publishers, New York, 1956, Seiten 69-109 beschrieben.

Ein Nachteil der Suspensionspolymerisation ist die breite Teilchengrößenverteilung der erzeugten Perlpolymerisate. Bei der Lasersinterung kann eine breite Teilchengrößenverteilung zu schlechter.Wiedergabequalität und Inhomogenität führen. Daher müssen die Perlen nach der Polymerisation gesiebt werden, um eine für das Lasersintern geeignete Siebfraktion zu gewinnen. Ein weiterer Nachteil der Suspensionspolymerisation ist die Notwendigkeit, größere Mengen an Molekulargewichtsregler zu verwenden, um Perlpolymerisate mit einem zum Lasersintern geeigneten niedrigen Molekulargewicht zu erhalten. Die Verwendung größerer Mengen an Molekulargewichtsregler wirkt sich negativ sowohl auf die Geschwindigkeit als auch auf der Ausbeute der Polymerisation aus.

Es wurde nun gefunden, daß durch Dispersionspolymerisation von Methylmethacrylat mit mindestens einem weiterem Methacrylatester mit einem C₂- bis C₁₀-Alkylrest als Comonomer Perlpolymerisate erhalten werden, die die für das Lasersintern erforderlichen Teilchengrößen und eine enge Teilchengrößenverteilung aufweisen.

Die Bestimmung der mittleren Teilchengröße (⌀) und der Teilchengrößenverteilung erfolgt mittels Bildanalyse. Als Maß für die Breite der Teilchengrößenverteilung der erzeugten kugelförmigen Copolymerisate wird das Verhältnis aus dem 90%-Wert (⌀ (90)) und dem 10%-Wert (⌀ (10)) der Volumenverteilung gebildet. Enge Teilchengrößenverteilungen in Sinne der Erfindungen bedeutet ⌀ (90)/⌀(10) < 2,0, bevorzugt ⌀(90)/⌀(10)<1,5.

Gegenstand der Erfindung sind kugelförmige Methylmethacrylat-Copolymerisate mit einer mittleren Teilchengröße von 6 bis 50 µm und oben definierter enger Teilchengrößenverteilung, die, bezogen auf die Masse des Copolymerisates, aus:
a) 90 bis 50 Gew.-%, bevorzugt 90 bis 60 Gew.-%, besonders bevorzugt 80 bis 60 Gew.-% Methylmethacrylat-Einheiten und
b) 10 bis 50 Gew.-%, bevorzugt 10 bis 40 Gew.-%, besonders bevorzugt 20 bis 40 Gew.-% mindestens einer Methacrylatester-Einheit mit einem C₂- bis C₁₀-Alkylrest bestehen.

Ein weiterer Gegenstand der Erfindung ist ein Verfahren zur Herstellung der erfindungsgemäßen Copolymerisate, bei dem ein Monomerengemisch aus:
a) 90 bis 50 Gew.-%, bevorzugt 90 bis 60 Gew.-%, besonders bevorzugt 80 bis 60 Gew.-% Methylmethacrylat und
b) 10 bis 50 Gew.-%, bevorzugt 10 bis 40 Gew.-%, besonders bevorzugt 20 bis 40 Gew.-% mindestens eines Methacrylatesters mit einem C₂- bis C₁₀-Alkylrest
durch Dispersionspolymerisation unter Verwendung eines Initiators polymerisiert wird.

Ein weiterer Gegenstand der Erfindung ist die Verwendung der erfindungsgemäßen Copolymerisate als Sintermaterial zum Lasersintern.

Als Methacrylatester mit einem C₂- bis C₁₀-Alkylrest können erfindungsgemäß C₂-bis C₁₀-Ester von Methacrylsäure oder Silanmonomere gemäß EP-A 417 539 verwendet werden. Bevorzugt sind C₂- bis C₈-Ester von Methacrylsäure, besonders bevorzugt C₂- bis C₄-Ester von Methacrylsäure. Beispielhaft seien genannt Ethylmethacrylat, n-Propylmethacrylat, iso-Propylmethacrylat, n- Butylmethacrylat, iso-Butylmethacrylat, n-Hexylmethacrylat, 2-Ethylhexylmethacrylat, n-Octylmethacrylat, n-Decylmethacrylat, Methoxyethylmethacrylat, Methoxybutylmethacrylat, Triethylenglycolmonomethacrylat, Methacryloxypropyltrimethoxysilan und Methacryloxypropyltriethoxysilan. Bevorzugt sind Ethylmethacrylat, n-Propylmethacrylat, iso-Propylmethacrylat, n- Butylmethacrylat und iso-Butylmethacrylat.

Bei dem erfindungsgemäßen Verfahren zur Herstellung von Methylmethacrylat-Co-polymerisaten werden die oben genannten Monomeren in einem Lösungsmittel unter Verwendung eines Initiators copolymerisiert.

Geeignete Lösungsmittel sind überwiegend nichtwäßrige Lösungsmitteln, wie Dioxan, Aceton, Acetonitril, Dimethylformamid und Alkoholen. Bevorzugt sind niedere Alkohole, insbesondere Methanol, Ethanol, n-Propanol, iso-Propanol, n-Butanol, iso-Butanol und tert.-Butanol. Gut geeignet sind auch Mischungen verschiedener Lösungsmittel, insbesondere Mischungen verschiedener Alkohole. Die Alkohole können auch bis zu 50 Gew.-% Wasser, bevorzugt bis zu 25 Gew.-% Wasser enthalten. Bei Verwendung von Lösungsmittelgemischen können auch unpolare Lösungsmittel, insbesondere Kohlenwasserstoffe, wie Hexan und Heptan in Anteilen von bis zu 50 Gew.-% mitverwendet werden.

Das Verhältnis von Monomer-Mischung zu Lösungsmittel beträgt 1:1 bis 1:20, vorzugsweise 1:3 bis 1:10.

Das erfindungsgemäße Verfahren wird vorzugsweise in Anwesenheit eines hochmolekularen Dispergators mit einem mittleren Molekulargewicht von 10 000 bis 1 000 000 g/mol durchgeführt.

Als hochmolekulare Dispergatoren sind im verwendeten Lösungsmittel lösliche natürliche und synthetische makromolekulare Verbindungen geeignet. Beispiele sind Cellulosederivate, wie Methylcellulose, Ethylcellulose, Hydroxypropylcellulose, Polyvinylacetat, teilverseiftes Polyvinylacetat, Polyvinylpyrrolidon, Copolymerisate aus Vinylpyrrolidon und Vinylacetat, sowie Copolymerisate aus Styrol und Maleinsäureanhydrid. Polyvinylpyrrolidon ist bevorzugt. Der Gehalt an hochmolekularem Dispergator beträgt 0,1 bis 20 Gew.-%, vorzugsweise 0,2 bis 10 Gew.-%, bezogen auf das Lösungsmittel.

Zusätzlich zu den Dispergatoren können auch ionische und nicht ionische Tenside eingesetzt werden. Geeignete Tenside sind z.B. Sulfobernsteinsäure-Natriumsalz, Methyltricaprylylammoniumchlorid oder ethoxyliertes Nonylphenol. Die Tenside können in Mengen von 0,1 bis 2 Gew.-% bezogen auf das Lösungsmittel verwendet werden.

Für das erfindungsgemäße Verfahren geeignete Initiatoren sind Verbindungen, die bei Temperaturerhöhung freie Radikale bilden. Beispielhaft seien genannt: Peroxyverbindungen wie Dibenzoylperoxid, Dilaurylperoxid, Bis-(p-chlorbenzoyl)peroxid, Dicyclohexylperoxydicarbonat und tert.-Amylperoxy-2-ethylhexan, des weiteren Azoverbindungen wie 2,2'-Azobis(isobutyronitril) und 2,2'-Azobis(2-methylisobutyronitril). Sofern das polare Medium einen Wasseranteil von wenigstens 5 % enthält, ist auch Natriumperoxydisulfat geeignet.

Gut geeignet sind auch aliphatische Peroxyester entsprechend den Formeln I, II oder III: 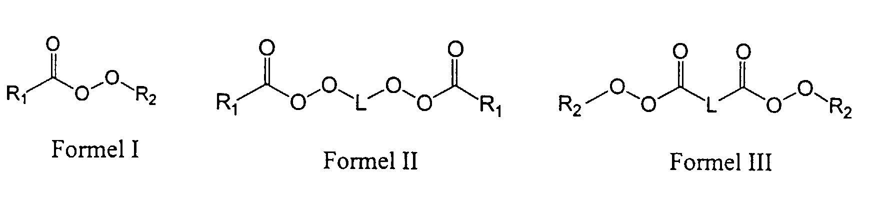 worin
- R₁: ein Alkylrest oder ein Cycloalkylrest mit 2 bis 20 C-Atomen,
- R₂: ein verzweigter Alkylrest mit 4 bis 12 C-Atomen und
- L: ein Alkylenrest oder Cycloalkylenrest mit 2 bis 20 C-Atomen ist.

Beispiele für aliphatische Peroxyester gemäß Formel I sind tert.-Butylperoxyacetat, tert.-Butylperoxyisobutyrat, tert.-Butylperoxypivalat, tert.-Butylperoxyoctoat, tert.-Butylperoxy-2-ethylhexanonat, tert.-Butylperoxyneodecanoat, tert.-Amylperoxypivalat, tert.-Amylperoxyoctoat, tert.-Amylperoxy-2-ethylhexanonat, tert.-Amylperoxyneodecanoat.

Beispiele für aliphatische Peroxyester gemäß Formel II sind 2,5-Bis(2-ethylhexanoylperoxy)-2,5-dimethylhexan, 2,5-Dipivaloyl-2'5-dimethylhexan, 2,5-Bis(2-neodecanoylperoxy)-2,5-dimethylhexan.

Beispiele für aliphatische Peroxyester gemäß Formel III sind Di-tert.-butylperoxyazelat und Di-tert.-amylperoxyazelat.

Die Initiatoren werden im allgemeinen in Mengen von 0,05 bis 6,0 Gew.-%, vorzugsweise 0,2 bis 4,0 Gew.-%, bezogen auf das Monomergemisch, angewendet.

Die Polymerisationstemperatur richtet sich nach der Zerfallstemperatur des Initiators sowie nach der Siedetemperatur des Lösungsmittels und liegt typischerweise im Bereich von 50 bis 150°C, vorzugsweise, 55 bis 120°C. Es ist vorteilhaft, bei der Siedetemperatur des Lösungsmittels zu polymerisieren und während der Polymerisation zu rühren. Die Polymerisationszeit beträgt im allgemeinen mehrere Stunden, z.B. 2 bis 30 Stunden.

Die Isolierung der erfindungsgemäßen Copolymerisate aus dem Reaktionsgemisch kann durch Filtration oder besonders vorteilhaft durch Sedimentation mit Hilfe einer Zentrifuge oder eines Dekanters erfolgen.

### Vergleichsbeispiele 1-8

In einem mit einem Gitterrührer ausgerüsteten 4 1-Reaktor wurden 2 340 g Methanol, 180 g Polyvinylpyrrolidon K30 (Mw = 55 000 g/mol) und 300 g Monomergemisch bestehend aus Methylmethacrylat und gegebenenfalls einem weiterem Comonomer (Tabelle 1) zu einer homogenen Lösung gemischt. Unter Stickstoff wurde diese Lösung innerhalb einer Stunde bei einer Rührgeschwindigkeit von 100 U/min auf 55°C gebracht und eine Lösung von 6 g 2,2'-Azobis(isobutyronitril) in 165 g Methanol dem Reaktor zugefügt. Die Polymerisationsmischung wurde weitere 20 Stunden bei 55°C und 100 U/min gerührt. Anschließend wurde die fertige Polymerdispersion auf Raumtemperatur abgekühlt und das Perlpolymerisat durch Sedimentation isoliert. Die Teilchengrößen der erhaltenen Perlpolymerisate sind in Tabelle 1 aufgeführt.

**Tabelle 1**

| **Methylmethacrylat-Copolymerisate als Vergleichsbeispiele** | | | | | | | |
|---|---|---|---|---|---|---|---|
| Vergleich | MMA [Gew.-%] | Comonomer | Comonomer [Gew.-%] | ⌀ [µm] | ⌀(10) [µm] | ⌀(90) [µm] | ⌀(90)/ ⌀(10) |
| 1 | 100 | - | 0 | 4,37 | 4,03 | 4,78 | 1,19 |
| 2 | 95 | EtMA | 5 | 4,36 | 4,02 | 4,77 | 1,19 |
| 3 | 95 | n-BuMA | 5 | 5,40 | 4,76 | 6,04 | 1,26 |
| 4 | 95 | EtHexMA | 5 | 4,71 | 4,16 | 4,86 | 1,17 |
| 5 | 95 | DodMA | 5 | 4,96 | 4,46 | 5,36 | 1,20 |
| 6 | 95 | StMA | 5 | 3,71 | 3,38 | 3,94 | 1,17 |
| 7 | 75 | DodMA | 25 | 3,08 | 2,73 | 3,40 | 1,24 |
| 8 | 75 | StMA | 25 | 2,51 | 2,06 | 3,13 | 1,52 |
| EtMA = Ethylmethacrylat; n-BuMA = n-Butylmethacrylat; EtHexMA = Ethylhexylmethacrylat; DodMA = Dodecylmethacrylat; StMA = Stearylmethacrylat | | | | | | | |

### Beispiele 1-12

Die Polymerisationen und Aufarbeitungen wurden in gleicher Weise wie die Vergleichsbeispiele durchgeführt. Die eingesetzten Monomergemische und die Teilchengrößen der erhaltenen Perlpolymerisate sind in Tabelle 2 aufgelistet.

**Tabelle 2**

| **Erfindungsgemäße Methylmethacrylat-Copolymerisate** | | | | | | | |
|---|---|---|---|---|---|---|---|
| Beispiele | MMA [Gew.-%] | Comonomer | [Gew.-%] | ⌀ [µm] | ⌀(10) [µm] | ⌀(90) [µm] | ⌀(90)/ ⌀(10) |
| 1 | 80 | EtMA | 20 | 6,64 | 6,06 | 6,91 | 1,14 |
| 2 | 75 | EtMA | 25 | 8,48 | 7,62 | 9,14 | 1,20 |
| 3 | 70 | EtMA | 30 | 12,24 | 11,37 | 13,42 | 1,18 |
| 5 | 80 | n-BuMA | 20 | 8,54 | 7,79 | 9,10 | 1,17 |
| 6 | 75 | n-BuMA | 25 | 10,12 | 9,24 | 11,27 | 1,22 |
| 7 | 70 | n-BuMA | 30 | 12,03 | 10,31 | 14,05 | 1,36 |
| 8 | 60 | n-BuMA | 40 | 25,49 | 20,37 | 28,97 | 1,42 |
| 9 | 50 | n-BuMA | 50 | 35,77 | 25,11 | 49,54 | 1,97 |
| 10 | 80 | EtHexMA | 20 | 7,59 | 6,84 | 7,78 | 1,14 |
| 11 | 75 | EtHexMA | 25 | 6,64 | 6,10 | 7,25 | 1,19 |
| 12 | 70 | EtHexMA | 30 | 6,47 | 5,85 | 6,95 | 1,19 |
| EtMA = Ethylmethacrylat; n-BuMA = n-Butylmethacrylat; EtHexMA = Ethylhexylmethacrylat | | | | | | | |

Die Bestimmung der Teilchendurchmesser und der Teilchengrößenverteilung der in den Beispielen und den Vergleichsbeispielen erhaltenen Produkte erfolgte mit einem Bildanalyse-Gerät SIS der Fa. Soft Imaging Systems GmbH. Als Dispergiermedium wurde Wasser verwendet. Die Messung erfolgte im Dunkelfeld bei 1180-facher Vergrößerung, wobei die Fokussierung auf das größere Endkorn eingestellt war. Als Partikelmerkmal wurde die Projektionsfläche vermessen und aus der Fläche der Kugeläquivalentdurchmesser berechnet. Als weiterer Parameter wurde der Formfaktor gemessen. Mit Hilfe dieses Formfaktors können bei der Auswertung u.a. die Aggregate diskriminiert werden. Es wurden mindestens 2000 Partikel pro Probe vermessen, um statistisch aussagekräftige Werte zu erhalten. Aus der gemessenen Verteilung der Partikeldurchmesser wurden der mittlere Partikeldurchmesser (⌀) sowie der 10 %-Wert (⌀ (10)) und der 90%-Wert (⌀ (90)) der Volumenverteilung ermittelt.

Das Ergebnis von Beispiel 7 wird im folgenden Diagramm dargestellt:

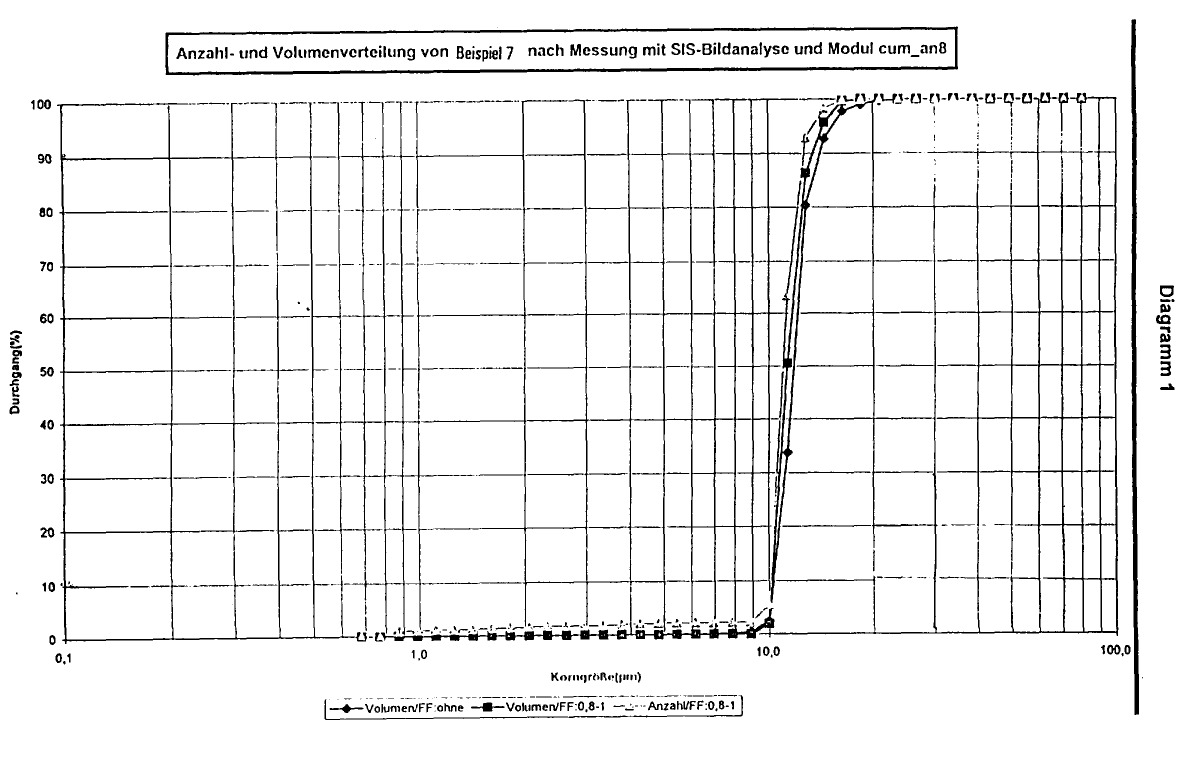

## Patentansprüche

1. Kugelförmige Methylmethacrylat-Copolymerisate, die eine mittlere Teilchengröße von 6 bis 50 µm aufweisen, wobei das Verhältnis aus dem 90 %-Wert (⌀ (90)) und dem 10 %-Wert (⌀ (10)) der Volumenverteilung kleiner als 2,0 ist, die bezogen auf die Masse des Copolymerisates
a) 90 bis 50 Gew.-% Methylmethacrylat-Einheiten und
b) 10 bis 50 Gew.-% mindestens einer Methacrylatester-Einheit mit einem C₂- bis C₁₀-Alkylrest
enthalten.

2. Verfahren zur Herstellung von Methylmethacrylat-Copolymerisate gemäß Anspruch 1, dadurch gekennzeichnet, daß ein Monomerengemisch bestehend aus:
a) 90 bis 50 Gew.-% Methylmethacrylat und
b) 10 bis 50 Gew.-% mindestens eines Methacrylatesters mit einem C₂-bis C₁₀-Alkylrest
unter Verwendung eines Initiators durch Dispersionspolymerisation polymerisiert wird.

3. Verfahren gemäß Anspruch 2, bei dem in Anwesenheit eines hochmolekularen Dispergators polymerisiert wird.

4. Verfahren gemäß Anspruch 2 oder 3, bei dem der Initiator in einer Menge von 0,05 bis 6,0 Gew.-%, bezogen auf die Monomermischung, eingesetzt wird.

5. Verwendung von Copolymerisaten gemäß Anspruch 1 als Sintermaterial zur Herstellung von 3D-Modellen mittels Lasersintern.
